# EUROPÄISCHE PATENTSCHRIFT

(11) **EP 2 118 991 B1**
(45) Veröffentlichungstag und Bekanntmachung des Hinweises auf die Patenterteilung: **11.07.2012**
(21) Anmeldenummer: 08706763.3
(22) Anmeldetag: 16.01.2008
(51) Int. Cl.: H02K 41/03, B65G 25/04, F16C 29/00, B23Q 1/00

(54) **LINEAR-MOTOR**
LINEAR MOTOR
MOTEUR LINÉAIRE

(30) Priorität: 16.02.2007 DE 202007002504 U
(43) Veröffentlichungstag der Anmeldung: 18.11.2009
(73) Patentinhaber: Fischer, Peter, 74842 Billigheim (DE)
(72) Erfinder: Fischer, Peter, 74842 Billigheim (DE)
(74) Vertreter: Müller, Hans
(86) Internationale Anmeldenummer: PCT/DE2008/000066
(87) Internationale Veröffentlichungsnummer: WO 2008/098535

(56) Entgegenhaltungen:
- EP-A- 0 561 529
- EP-A- 1 615 322
- JP-A- 57 052 365
- JP-A- 60 226 762
- JP-A- 63 180 443
- US-A- 5 825 104

## Beschreibung

### TECHNISCHES GEBIET

Die Erfindung betrifft einen Linear-Motor. Ein solcher Linear-Motor arbeitet in linearer Richtung und kommt in vielen Anwendungsbereichen zum Einsatz, wie zum Beispiel bei der Lösung von Handlings-, Pick & Plays-, Verpackungs-, Füge- und Klebeaufgaben.

### STAND DER TECHNIK

Ein bekannter Linear-Motor besitzt eine geschliffene Grundplatte, auf der jeweils seitlich eine Linear-Führung aufgeschraubt ist. Die beiden Linear-Führungen rahmen von der Seite her eine auf der Grundplatte befestigte Stahlplatte ein. Auf der Stahlplatte sind Permanentmagnete befestigt, die zu ihrem Schutz mit einem Edelstahlblech abgedeckt sind. Längs der beiden Linear-Führungen ist ein die Motorwicklungen enthaltender Schlitten verfahrbar. Die Herstellkosten eines solchen Linear-Motors sind aufgrund seiner technisch anspruchsvollen, aufwendigen Konstruktion verhältnismäßig hoch.

Aus der JP 57 05 2365 A ist ein elektrischer Linear-Antrieb mit einem Elektromagnete enthaltenden Primärteil und einem Permanentmagnete enthaltenden Sekundärteil bekannt, wobei die Permanentmagnete auf einem Grundträger befestigt sind. Der elektrische Linear-Antrieb besitzt einen Schlitten, an dem die Elektromagnete befestigt sind und der entlang von Linearführungen am Grundträger verfahren werden kann. Der Grundträger ist zusammen mit seinen Linearführungen als standardisierte Profil-Führungsschiene ausgebildet. Der Schlitten ist aus einem konventionellen, standardisierten Laufwagen, der der Profil-Führungsschiene angepasst ist und aus einem die Elektromagnete tragenden Traggerüst zusammengesetzt.

### DARSTELLUNG DER ERFINDUNG

Ausgehend von diesem Stand der Technik liegt der Erfindung die Aufgabe zugrunde, einen wirtschaftlich günstigen Linear-Motor der eingangs genannten Art anzugeben.

Die Erfindung ist durch die Merkmale des Anspruchs 1 gegeben. Sinnvolle Weiterbildungen der Erfindung sind Gegenstand von sich daran anschließenden weiteren Ansprüchen.

Bei dem elektrischen Linearantrieb nach der Erfindung wird eine handelsübliche Profil-Führungsschiene als Tragschiene für die Permanentmagnete verwendet. Ein oder mehrere, ebenfalls handelsübliche der Führungsschiene angepasste Laufwagen bilden zusammen mit einem die ebenen Motorwicklungen tragenden Traggerüst eine Baueinheit, welche den längs der Profil-Führungsschiene verfahrbaren

Schlitten bildet. Eine solche Konstruktion ist durch die Verwendung von handelsüblicher Profil-Führungsschiene und Laufwagen äußerst kostengünstig.

Um Permanentmagnete verwenden zu können, die größer als die Breite der Schiene sind und die dennoch vollflächig gehalten werden sollen, ist erfindunggemäß ein entsprechend breites zusätzliches Schienenteil zum Halten der Permanentmagnete an der Schiene, wie insbesondere an der Unterseite der Schiene befestigt.

An dem Schlitten können konstruktive Vorkehrungen zum austauschbaren Befestigen verschiedener Bearbeitungs- und Handhabungsvorrichtungen vorgesehen sein.

Die Profil-Führungsschiene kann sich endseitig auf ortsfesten oder verschiebbaren Lagern abstützen. Ein solches verschiebbares Lager kann beispielsweise der Schlitten eines weiteren Linear-Motors sein. Auf diese Weise kann dann ein Bearbeitungs- und/oder Handhabungsvorrichtungen tragender Schlitten nicht nur längs einer Geraden sondern auch in einer Ebene verfahren werden.

Auch ist es möglich, den Schlitten eines Linear-Motors ortsfest zu lagern und dann die Profil-Führungsschiene längsverschieblich zu verfahren.

Weitere Ausgestaltungen und Vorteile der Erfindung sind den in den Ansprüchen ferner angeführten Merkmalen sowie den in den Zeichnungen dargestellten Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine perspektivische Ansicht eines Linear-Motors nach dem Stand der Technik,
- Fig. 2: eine perspektivische Untersicht auf den Linear-Motor nach Fig. 1, ohne die Außenhülle seines Schlittens,
- Fig. 3: einen Querschnitt durch den Schlitten gemäß Fig. 1,
- Fig. 4: einen Querschnitt vergleichbar mit dem der Fig. 3, für eine durch ein Schienenteil in der Breite vergrößerte Führungsschiene nach der Erfindung,
- Fig. 5: eine perspektivische Ansicht einer 3 Linear-Motore enthaltenden Bohrvorrichtung.

### WEGE ZUM AUSFÜHREN DER ERFINDUNG

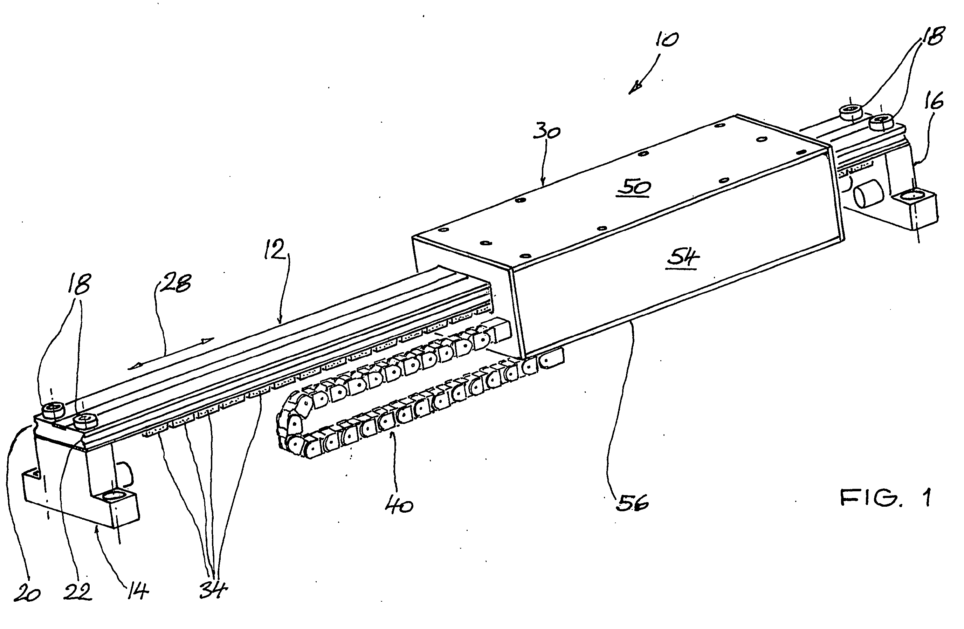

Ein in Fig. 1 dargestellter Linear-Motor 10 besitzt eine Profil-Führungsschiene 12 als Grundträger, die endseitig auf jeweils einem kopfstehenden T-Lagerblock 14, 16, mittels zweier Befestigungsschrauben 18 festgeschraubt ist. Die beiden Lagerblöcke 14, 16 sind, was nicht näher dargestellt ist, lagefixiert gehalten.

Die Führungsschiene 12 ist ein konventionelles, standardisiertes Produkt. Solche Profil-Führungsschienen können daher als handelsübliches Produkt von verschiedenen Firmen bezogen werden.

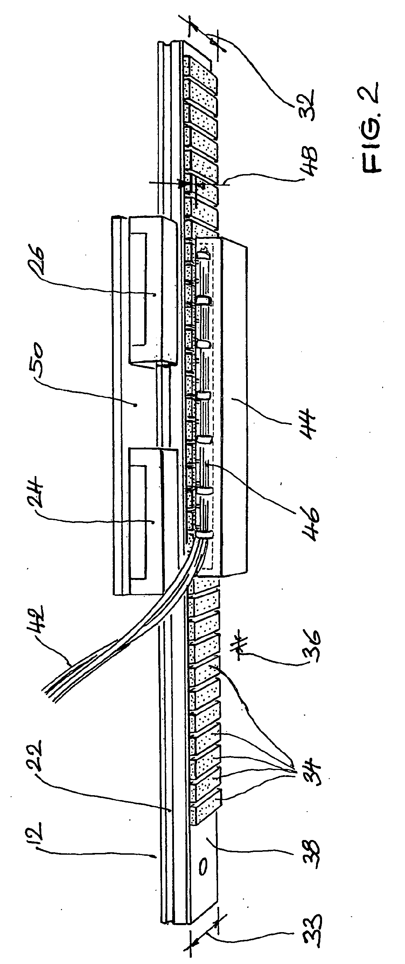

Die Führungsschiene 12 besitzt an ihren beiden seitlichen Außenflächen jeweils eine Längsnut 20, 22, in die die Führungen von im vorliegenden Beispielsfall zwei Laufwagen 24, 26 (Fig. 2) eingreifen. Beide Laufwagen 24, 26 sind Bestandteil des längs der beiden Längsnuten 20, 22 und damit längs der Führungsschiene 12 in Längsrichtung 28 verfahrbaren Schlitten 30.

Auf der Unterseite der Führungsschiene 12, den Laufwagen 24, 26 gegenüberliegend, sind quaderförmige Permanentmagnete 34 angeklebt. Die Permanentmagnete haben eine längliche Gestalt und besitzen im vorliegenden Beispielsfall eine Länge 32, die der Breite 33 der Führungsschiene 12 entspricht. Die Permanentmagnete 34 sind mit gegenseitigem konstanten Abstand 36 auf der Unterseite 38 der Führungsschiene 12 angeordnet. Aus dem Schlitten 30 ragt eine Energiekette 40 heraus, an der die Versorgungs- und gegebenenfalls Steuerleitungen 42 (Fig. 2) angeschlossen sind, die mit den Motorwicklungen 46 verbunden sind. Im vorliegenden Beispielsfall sind die Motorwicklungen 46 Teil eines Statorpakets 44.

Das Statorpaket 44 mit seinen Motorwicklungen 46 ist im Inneren des Schlittens 30, unterhalb der Permanentmagnete 34 vorhanden. Das Statorpaket 44 mit den Wicklungen 46 hat einen konstanten Abstand 48 (Luftspalt) zu den Permanentmagneten 34.

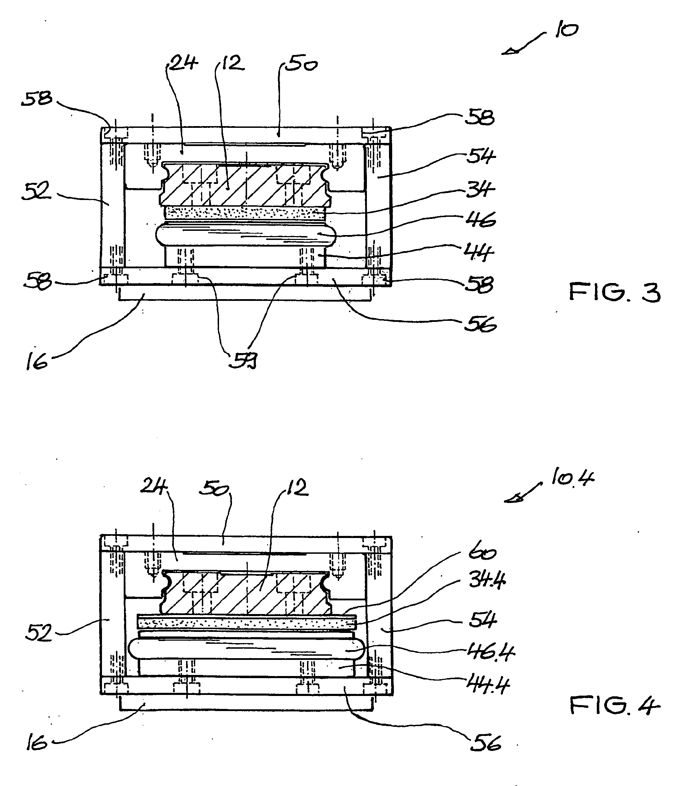

Das Statorpaket 44 mit seinen Wicklungen 46 hängt über ein Rahmengestell an den beiden Laufwagen 24, 26 an. Statt der beiden Laufwagen 24, 26 könnte auch nur ein Laufwagen vorhanden sein. Von dem Rahmengestell ist in Fig. 2 die obere Tragplatte 50 dargestellt, die fest an den beiden Laufwagen 24, 26 befestigt ist. Seitlich an der oberen Tragplatte 50 ist eine linke und rechte Seitenplatte 52, 54 angeschraubt, an deren jeweiligem unteren Ende eine untere Tragplatte 56 angeschraubt ist. Die Schrauben einer solchen Verschraubung 58 sind in Fig. 3 gestrichelt dargestellt. Das Rahmengestell kann aus einem abgekanteten Blechteil oder auch aus einem Gussteil hergestellt sein.

Auf der unteren Tragplatte 56 ist das die Wicklungen enthaltende Statorpaket 44 über eine Verschraubung 59 befestigt, von der in Fig. 3 zwei Schrauben dargestellt sind. Durch entsprechende elektrische Versorgung der Wicklungen 46 über die Energiekette 40 kann der Schlitten 30 in Längsrichtung 28 hin und her verfahren werden.

Der in Fig. 4 dargestellte Linear-Motor 10.4 unterscheidet sich vom Linear-Motor 10 dahingehend, dass auf der Unterseite der Führungsschiene 12 ein Schienenteil 60 befestigt wie beispielsweise angeschraubt oder angeklebt ist. Dieses Schienenteil 60 überragt seitlich die Führungsschiene 12. Auf der Unterseite des Schienenteils 60 sind Permanentmagnete 34.4 vorhanden. Die Permanentmagnete 34.4 sind so lang wie das Schienenteil 60 breit ist. Im Vetgleich zum Linear-Motor 10 können bei dem Linear-Motor 10.4 dementsprechend großvolumigere Permanentmagnete verwendet werden. Das Statorpaket 44.4 mit seinen Motorwicklungen 46.4 ist der Größe der Permanentmagnete angepasst und damit größer als bei dem Linear-Motor 10 (Fig. 3).

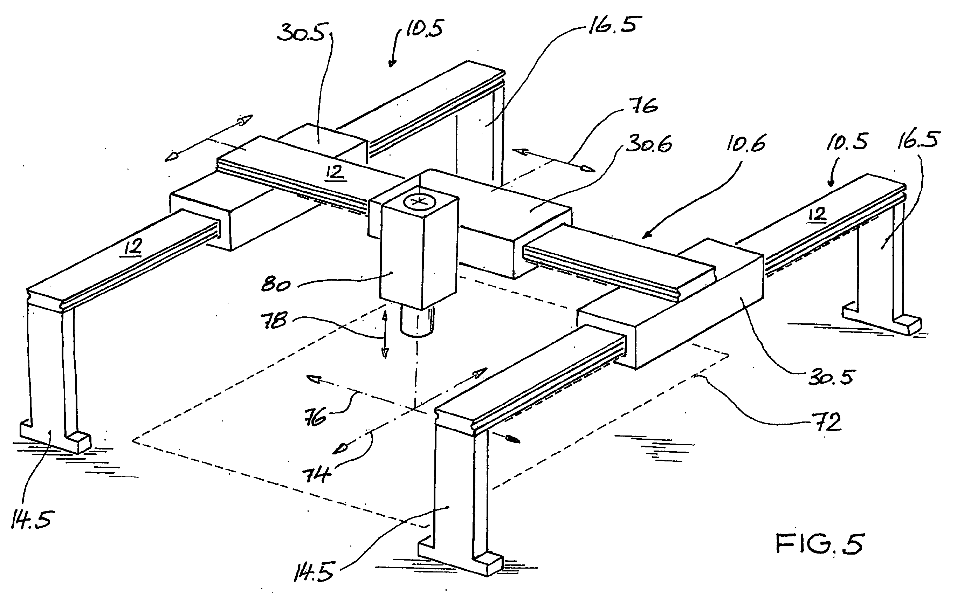

Vorstehend beschriebene Linear-Motoren können grundsätzlich in beliebiger Ausrichtung im Raum angeordnet werden. Bei der in Fig. 5 schematisch dargestellten Bohrvorrichtung 70 sind zwei Linear-Motoren 10.5 in parallelem Abstand nebeneinander in gleicher Höhe über einem Arbeitsfeld 72 positioniert.

Dazu ruhen die beiden Linear-Motoren 10.5 endseitig jeweils auf zwei Lagerblöcken 14.5, 16.5. Die Lagerblöcke sind alle gleich hoch, so dass die längs der beiden Linear-Motoren 10.5 in Y-Richtung in gleicher Weise hin und her verfahrbaren beiden Schlitten 30.5 jeweils einen konstanten, gleichen Abstand zum Arbeitsfeld 72 besitzen.

Die beiden Linear-Motoren 10.5 und ihre beiden Schlitten 30.5 entsprechen den vorstehend beschriebenen Linear-Motoren.

Auf beiden Schlitten 30.5 der beiden Linear-Motoren 10.5 stützt sich jeweils endseitig ein dritter Linear-Motor 10.6 ab. Die beiden Schlitten 30.5 bilden dann in Y-Richtung 74 verfahrbare Abstützeinrichtungen für diesen als Brückenträger ausgebildeten dritten Linear-Motor 10.6. Auch der dritte Linear-Motor 10.6 entspricht den vorstehend bereits beschriebenen Linear-Motoren. Auch er besitzt einen Schlitten 30.6, der prinzipiell den vorstehenden Schlitten 30, 30.5 entspricht. Der dritte Linear-Motor 10.6 ist parallel zur X-Richtung 76 verfahrbar. Durch gemeinsames Verfahren der beiden Schlitten 30.5 in Y-Richtung 74 und durch Verfahren des Schlittens 30.6 in X-Richtung 76 kann der Schlitten 30.6 oberhalb jedes Punktes des Arbeitsfeldes 72 platziert werden. Damit kann auch das am Schlitten 30.6 befestigte Bearbeitungsgerät, das im vorliegenden Fall als ein Bohrgerät 80 ausgebildet ist, ebenfalls oberhalb jedes Punktes des Arbeitsfeldes 72 positioniert werden. Das Bohrgerät 80 kann im vorliegenden Beispielsfall längs der dritten Hauptachse, in Z-Richtung 78, relativ zum Schlitten 30.6 verfahren werden, so dass mit dem Bohrgerät 80 eine auf dem Arbeitsfeld 72 liegende Platte, wie beispielsweise eine Platine, an beliebigen Stellen bearbeitet wie beispielsweise durchbohrt werden kann.

Bei dem in Fig. 5 dargestellten Bohrgerät 80 sind die Versorgungs- und Steuerleitungen für die einzelnen Schlitten und für das Bohrgerät nicht extra dargestellt. Auch stützt sich die Profil-Führungsschiene unmittelbar, unter Weglassen von endseitigen Lagern wie beispielsweise Lagerblöcken 14, 15, auf den beiden Schlitten 30.5 ab.

## Patentansprüche

1. Linear-Motor (10, 10.4, 10.5, 10.6),
- mit einem Elektromagnete (46, 46.4) enthaltenden Primärteil,
- mit einem Permanentmagnete (34, 34.4) enthaltenden Sekundärteil,
- mit einem die Permanentmagnete tragenden Grundträger,
- mit zumindest einem Schlitten (30, 30.5, 30.6),
- - an dem die Elektromagnete (44, 44.4, 46, 46.4) befestigt sind und
- - der längs an den am Grundträger vorhandenen Linearführungen verfahrbar ist,
- wobei der Grundträger zusammen mit seinen Linearführungen eine konventionelle standardisierte Profil-Führungsschiene (12) ist,
- wobei jeder Schlitten (30, 30.5, 30.6) zusammengesetzt ist
- aus zumindest einem konventionellen, standardisierten Laufwagen (24, 26), der der Profil-Führungsschiene (12) angepasst ist und der längs dieser Profil-Führungsschiene (12) verfahrbar ist,
- - und aus einem die Elektromagnete (44,44.4,46,46.4) tragenden Traggerüst (50, 52, 54, 56), das an dem zumindest einen Laufwagen (24, 26) befestigt ist,
- **dadurch gekennzeichnet, dass**
- ein Schienenteil (60), an dem die Permanentmagente (34, 34.4) befestigt sind, an der Profil-Führungsschiene (12) befestigt ist, das breiter ist als die Breite der Profil-Führungsschiene (12).

2. Linear-Motor nach Anspruch 1,
- **dadurch gekennzeichnet, dass**
- Permanentmagnete (34, 34.4) angeklebt sind.

3. Linear-Motor nach Anspruch 1 oder 2,
- **dadurch gekennzeichnet, dass**
- Permanentmagnete (34, 34.4) an der Unterseite des Schienenteils (60) vorhanden sind.

4. Linear-Motor nach einem der vorstehenden Ansprüche,
- **dadurch gekennzeichnet, dass**
- an dem zumindest einen Schlitten (30) eine Bearbeitungsvorrichtung (80) oder Handhabungsvorrichtung anbringbar ist.

5. Linear-Motor nach einem der vorstehenden Ansprüche,
- **dadurch gekennzeichnet, dass**
- eine Abstützeinrichtung (14, 14.5, 16, 16.5) für die Profil-Führungsschiene (12) an ihren beiden Enden vorhanden ist.

6. Linear-Motor nach einem der vorstehenden Ansprüche,
- **dadurch gekennzeichnet, dass**
- die Profil-Führungsschiene (12) oder ihre Abstützeinrichtung (14, 16) an zumindest einem Schlitten (30) von zumindest einem weiteren Linearantrieb befestigbar ist.

## Claims

1. Linear motor (10, 10.4, 10.5, 10.6),
- having a primary part containing solenoids (46, 46.4),
- having a secondary part containing permanent magnets (34, 34.4),
- having a base support which supports the permanent magnets,
- having at least one slide (30, 30.5, 30. 6)
-- on which the solenoids (44, 44.4, 46, 46.4) are mounted and
-- which can be moved along the linear guides which are provided on the base support,
- with the base support, together with its linear guides, being a conventional, standardized profile guide rail (12),
- with each slide (30, 30.5, 30.6) being made up
-- of at least one conventional, standardized carriage (24, 26) which is matched to the profile guide rail (12) and can be moved along this profile guide rail (12),
-- and of a support frame (50, 52, 54, 56) which supports the solenoids (44, 44.4, 46, 46.4) and is attached to the at least one carriage (24, 26),
- **characterized in that**
- a rail part (60), to which the permanent magnets (34, 34.4) are attached, is attached to the profile guide rail (12), the said rail part being wider than the width of the profile guide rail (12).

2. Linear motor according to Claim 1,
- **characterized in that**
- permanent magnets (34, 34.4) are adhesively bonded.

3. Linear motor according to Claim 1 or 2,
- **characterized in that**
- permanent magnets (34, 34.4) are provided on the lower face of the rail part (60).

4. Linear motor according to one of the preceding claims,
- **characterized in that**
- a processing apparatus (80) or a handling apparatus can be fitted to the at least one slide (30).

5. Linear motor according to one of the preceding claims,
- **characterized in that**
- a supporting device (14, 14.5, 16, 16.5) for the profile guide rail (12) is provided at both ends of the said profile guide rail.

6. Linear motor according to one of the preceding claims,
- **characterized in that**
- the profile guide rail (12) or the supporting device (14, 16) of the said profile guide rail can be attached to at least one slide (30) of at least one further linear drive.

## Revendications

1. Moteur linéaire (10, 10.4, 10.5, 10.6) comprenant
- une partie primaire renfermant des électro-aimants (46, 46.4),
- une partie secondaire renfermant des aimants permanents (34, 34.4),
- un support de base portant lesdits aimants permanents,
- au moins une pièce coulissante (30, 30.5, 30.6)
-- à laquelle lesdits électro-aimants (44, 44.4, 46, 46.4) sont fixés, et
-- qui peut être déplacée le long des guides linéaires présents sur ledit support de base,
- lequel support de base se présente, conjointement à ses guides linéaires, comme un rail profilé de guidage (12) conventionnel et normalisé,
- chaque pièce coulissante (30, 30.5, 30.6) étant composée
-- d'au moins un chariot de roulement (24, 26) conventionnel et normalisé, qui est adapté au rail profilé de guidage (12) et peut être déplacé le long de ce rail profilé de guidage (12),
-- et d'une carcasse de support (50, 52, 54, 56) qui porte lesdits électro-aimants (44, 44.4, 46, 46.4), et est fixée audit chariot de roulement (24, 26) à présence minimale,
- **caractérisé par le fait**
- **qu'**une partie (60) formant glissière, à laquelle les aimants permanents (34, 34.4) sont fixés, est fixée au rail profilé de guidage (12) et offre une largeur supérieure à la largeur dudit rail profilé de guidage (12).

2. Moteur linéaire selon la revendication 1,
- **caractérisé par le fait que**
- des aimants permanents (34, 34.4) sont rapportés par collage.

3. Moteur linéaire selon la revendication 1 ou 2,
- **caractérisé par le fait que**
- des aimants permanents (34, 34.4) sont présents à la face inférieure de la partie (60) formant glissière.

4. Moteur linéaire selon l'une des revendications précédentes,
- **caractérisé par le fait**
- **qu'**un dispositif d'usinage (80), ou un dispositif de manipulation, peut être implanté sur la pièce coulissante (30) à présence minimale.

5. Moteur linéaire selon l'une des revendications précédentes,
- **caractérisé par le fait**
- **qu'**un système d'appui (14, 14.5, 16, 16.5), affecté au rail profilé de guidage (12), est présent aux deux extrémités de ce dernier.

6. Moteur linéaire selon l'une des revendications précédentes,
- **caractérisé par le fait que**
- le rail profilé de guidage (12), ou son système d'appui (14, 16), peut être fixé à au moins une pièce coulissante (30) d'au moins un autre entraînement linéaire.
